# FASCICULE DE BREVET EUROPEEN

(11) **EP 2 073 300 B1**
(45) Date de publication et mention de la délivrance du brevet: **18.04.2012**
(21) Numéro de dépôt: 08171789.4
(22) Date de dépôt: 16.12.2008
(51) Int. Cl.: H01M 10/0525, H01M 10/04, H01M 10/0585

(54) **Batterie bipolaire à étanchéité interplaque améliorée**
Bipolare Batterie mit verbesserter Abdichtung zwischen den Platten
Bipolar battery with improved sealing between plates

(30) Priorité: 21.12.2007 FR 0760248
(43) Date de publication de la demande: 24.06.2009
(73) Titulaire: Commissariat à l'Énergie Atomique et aux Énergies Alternatives, 75015 Paris (FR)
(72) Inventeur: Chami, Marianne, 38600, Fontaine (FR); Martinet, Sébastien, 38000, Grenoble (FR); Mourzagh, Djamel, 38120, Saint Egreve (FR)
(74) Mandataire: Ilgart, Jean-Christophe

(56) Documents cités:
- JP-A- 2005 310 588
- JP-A- 2006 139 994
- US-A- 4 125 684
- US-A- 4 204 036

## Description

### DOMAINE TECHNIQUE ET ART ANTÉRIEUR

La présente invention se rapporte à une batterie multipolaire dont les propriétés d'étanchéité vis-à-vis de l'électrolyte sont améliorées et à un procédé de réalisation d'une telle batterie.

Il existe des accumulateurs lithium-ion utilisant le couple oxyde de cobalt lithié LiCoO₂ pour l'électrode positive (cathode) et le graphite pour l'électrode négative (anode). Ces accumulateurs offrent une tension nominale de l'ordre de 3,6 V, alors que la plupart des accumulateurs de type Ni-Cd, Ni-MH, etc. offre une tension nominale de l'ordre de 1,5V. En outre, ces accumulateurs offrent une densité d'énergie très, élevée d'environ 300 à 400 Wh.1⁻¹ et d'environ 160 à 200 Wh.kg⁻¹, une faible auto-décharge et une durée de vie élevée, de l'ordre de 500 cycles, voire 800 cycles.

Cependant, les accumulateurs lithium-ion actuels dans la configuration connue n'offrent pas un bon comportement en puissance, principalement à cause du graphite utilisé à l'électrode négative.

Il a alors été proposé de remplacer ce dernier par l'oxyde de titane (Li₄Ti₅O₁₂) dans une cellule Li-ion de type monopolaire. Cependant, cet accumulateur ne présente qu'une tension nominale de l'ordre de 2,5 V, et par conséquent la densité d'énergie de la batterie est diminuée.

Afin de réaliser une batterie conservant une densité d'énergie comparable à celle des accumulateurs Li-ion classiques, on prévoit de réaliser une batterie comportant une pluralité de cellules en série, ce qui permet d'augmenter la tension du système global.

Chaque cellule comporte une anode, une cathode et un électrolyte.

Pour cela, on structure la batterie sous la forme d'une batterie bipolaire, i.e. une batterie présentant des collecteurs de courant permettant une connexion entre une anode d'une cellule et une cathode d'une cellule adjacente. Cette structure permet de réduire la résistance électrique de l'ensemble par rapport à une batterie composée d'une pluralité de cellules monopolaires reliées en série par des connecteurs extérieurs.

Cette structure bipolaire permet également de limiter les masses et les volumes inutiles.

Par conséquent, une batterie bipolaire est formée d'un empilement de cellules selon un axe longitudinal entre lesquelles sont intercalés des plaques collectrices.

Une étanchéité est réalisée au niveau de chaque cellule afin de confiner l'électrolyte qui est généralement liquide. Cette étanchéité est obtenue en réalisant une paroi reliant deux plaques conductrices et entourant chaque cellule.

Cette étanchéité a une grande importance puisqu'une circulation d'électrolyte entre deux cellules due à une fuite peut provoquer l'apparition de courants ioniques ou de ponts ioniques, provoquant la circulation des ions Li⁺, ce qui entraîne alors un dysfonctionnement général de la batterie.

Cette paroi est par exemple réalisée au moyen d'une colle ou d'un matériau polymère thermoactivable, la colle ou le polymère étant résistant à l'électrolyte. La réalisation de telles parois est par exemple décrit dans le document US 5 595 839. Afin d'activer le polymère, des moyens de chauffage viennent en contact avec les extrémités longitudinales de l'empilement.

Ce procédé est efficace dans le cas d'un nombre réduit de cellules empilées, par exemple deux. Or, dans le cas d'un nombre conséquent de cellules, par exemple supérieur ou égal à trois, ce qui est nécessaire pour obtenir la densité d'énergie requise, ce procédé a un inconvénient majeur.

En effet, le chauffage du polymère, destiné à former les parois des cellules intermédiaires entre les deux cellules disposées au niveau des extrémités longitudinales de l'empilement, est obtenu par conduction. Par conséquent, pour obtenir un échauffement suffisant du polymère des cellules intermédiaires, un temps de chauffage important est requis. Or ce temps de chauffage est trop long pour le polymère des cellules d'extrémité. Cela crée alors une disparité entre les cellules d'extrémité et les cellules intermédiaires, en effet les cellules d'extrémité ont des parois moins hautes que celles des cellules intermédiaires, puisque celles-ci ont été chauffées plus longtemps. Par conséquent la hauteur des cellules d'extrémité est plus faible que celle des cellules d'extrémité, la résistance interne de la batterie est donc augmentée.

Il a été proposé, par exemple dans le document US 2004/0091771, d'utiliser plusieurs polymères ayant des températures de fusion différentes, leur température de fusion décroissant au fur et à mesure qu'on s'éloigne des extrémités de l'empilement. Or ce procédé de sellage nécessite d'une part, la mise en oeuvre de plusieurs polymères, ce qui demande une attention toute particulière lors de réalisation des étanchéités dans la mise en place des différents types de polymères, et un contrôle particulièrement précis de la température. Or, il arrive de manière fréquente, que certains polymères utilisés pour former des parois au centre de l'empilement fluent provoquant une fuite d'électrolyte.

Ce document propose également d'utiliser un électrolyte de type gel, ce qui permet d'éviter l'écoulement en cas de rupture d'étanchéité. Or, de manière générale, un électrolyte sous forme de gel offre de moins bonnes performances qu'un électrolyte liquide.

Il est également connu du document JP 2005 3100588 une batterie bipolaire formée par un empilement de cellules. L'étanchéité des cellules est obtenue par chauffage, mais ce document ne fournit aucune indication sur la manière dont est effectué ce chauffage. Par ailleurs, la surface de la matière active de chaque cellule varie avec la surface des plaques collectrices. Il y a alors un risque de détérioration de la matière active lors du chauffage.

Le document JP 2006139994 décrit également une batterie bipolaire comportant un empilement de cellules, les cellules étant telles qu'une zone de chacune des plaques collectrices de charges de chacune des cellules est dégagée par rapport à la zone du dessus permettant une connexion facilité à un câble. Le problème de détérioration de la matière active lors de la réalisation des étanchéités latérales des cellules se pose également.

C'est par conséquent un but de la présente invention d'offrir une batterie bipolaire offrant une haute tension nominale et une forte densité d'énergie, dans laquelle les électrolytes, de préférence liquides, des différentes cellules sont isolés de manière sûre évitant un dysfonctionnement prématuré de la batterie.

C'est également un but de la présente invention d'offrir un procédé de réalisation simple d'une batterie bipolaire à haute tension nominale et à forte densité d'énergie, permettant d'assurer un confinement de l'électrolyte dans les différentes cellules.

### EXPOSÉ DE L'INVENTION

Les buts précédemment énoncés sont atteints par une batterie bipolaire formée d'un empilement de cellules dont la structure permet un chauffage réparti au niveau de chaque cellule, et évitant un apport trop important de chaleur aux cellules d'extrémité.

Pour cela, il est prévu de libérer une zone d'au moins une plaque collectrice de chaque cellule au droit du matériau destiné à former la paroi.

Il a été constaté, de manière surprenante, que le fait de libérer une telle zone permettait d'obtenir un chauffage efficace des parois intermédiaires sans requérir une surchauffe des parois d'extrémité.

Dans certaines réalisations, ces zones libres permettent à un moyen de chauffage de venir en contact avec chaque plaque collectrice au droit de ce matériau, pour réaliser un chauffage individuel de chaque matériau.

En d'autres termes, les joints interposés entre les plaques interconnectrices sont décalés transversalement afin que deux joints ne se trouvent pas au droit l'un de l'autre selon l'axe d'empilement.

Les zones libres des plaques collectrices ainsi ménagées permettent d'assembler des empilements intermédiaires. Par exemple, on prévoit de réaliser des ensembles de deux cellules, puis on assemble ces ensembles, une cellule est alors délimitée entre les deux ensembles, en appliquant le moyen de chauffage sur l'une des zones libres d'une des plaques collectrices d'extrémité de l'un des ensembles. Ce procédé d'assemblage ne provoque pas de nouveau le chauffage d'un joint paroi déjà solidarisé aux plaques collectrices associées.

Dans un procédé de réalisation particulier, le moyen de chauffage accède directement à la zone à chauffer de chaque plaque, et chauffe un joint sans chauffer l'autre joint. On réalise donc l'étanchéité de chaque cellule de manière séparée. Soit, de manière séparée dans le temps, en utilisant le même moyen de chauffage pour toute les cellules, celui-ci venant donc successivement en contact avec les plaques collectrices, soit de manière séparée dans la mise en oeuvre des moyens, en prévoyant une pluralité de moyens de chauffage dédiés chacun à une cellule, toutes ou partie des étanchéités étant alors réalisées simultanément.

Ainsi on évite une surchauffe d'une partie du matériau destinée à former les parois des cellules d'extrémité. Le procédé de réalisation est simple puisqu'il ne nécessite pas la mise en oeuvre de plusieurs polymères, en outre la température de chauffage peut être conservée identique pour toutes les cellules.

La présente invention a alors principalement pour objet un procédé de fabrication d'une batterie bipolaire comportant aux moins trois cellules munies de quatre plaques collectrices de surfaces différentes, comportant les étapes définies dans la revendication 1.

La présente invention a également pour objet une batterie bipolaire selon la revendication 9 obtenue par le procédé selon la présente invention.

La présente invention a également pour objet une batterie bipolaire selon la revendication 12 obtenue par le procédé selon la présente invention.

Les parois peuvent avantageusement être situées au droit des bords extérieurs d'une des plaques collectrices qu'elle relie, ce qui permet d'éviter les contacts en bords de plaques.

Avantageusement, les extrémités des plaques collectrices sont recouvertes d'une couche formant une barrière supplémentaire à l'écoulement de l'électrolyte.

Dans un exemple de réalisation, les parois latérales successives sont de section croissante dans un sens donné, les plaques collectrices successives ayant une surface croissante dans ledit sens donné.

Dans un autre exemple de réalisation, la batterie comporte des parois de plus grande section et des parois de plus petite section, lesdites parois de plus grande section et lesdites parois de plus petite section se succédant alternativement, et des plaques collectrices de plus grande section et des plaques collectrices de plus petite section, les plaques collectrices de plus grande section et les plaques collectrices de plus petite section se succédant alternativement.

Les parois sont par exemple en polymère thermoactivable, du type époxy, ou en colle du type polyacrylique, polyuréthane.

La couche déposée sur la périphérie des plaques interconnectrices est, par exemple une colle du type polyacrylique, polyuréthane.

Avantageusement, les cathodes sont en LiFePO₄, et les anodes sont en Li₄Ti₅O₁₂.

Lors de l'étape b), l'application d'un chauffage aux plaques intermédiaires peut avoir lieu simultanément pour solidariser toutes les parois latérales aux plaques collectrices correspondantes simultanément, l'application d'un chauffage aux plaques intermédiaires peut avoir lieu successivement pour chaque paroi latérale.

De manière avantageuse, préalablement à l'étape a), une étape a0) de réalisation d'un ensemble d'une plaque collectrice et d'une anode, d'un ensemble d'une plaque collectrice et d'une cathode et d'ensembles de plaques collectrices avec une anode sur une face et une cathode sur une autre face est prévue.

Suite à l'étape a0) et avant l'étape a), on peut prévoir prévu une étape de découpe des plaques collectrices à la surface requise.

Les plaques collectrices sont, par exemple découpées de manière à avoir des plaques collectrices de surface décroissante.

L'étape b) est avantageusement effectuée en premier au niveau des plaques de plus petites surfaces.

Le procédé de fabrication selon l'invention peut également comporter une étape suivant l'étape b) de dépôt d'une couche de matériau résistant à l'électrolyte sur la périphérie extérieure libre de chaque plaque collectrice et en contact avec les parois latérales.

### BRÈVE DESCRIPTION DES DESSINS

La présente invention sera mieux comprise à l'aide de la description qui va suivre et des dessins en annexe sur lesquels :
- la figure 1 est une vue en coupe longitudinale d'un premier exemple de réalisation d'un empilement de cellules d'une batterie bipolaire selon la présente invention,
- la figure 2 est une vue en coupe longitudinale d'un deuxième exemple de réalisation d'un empilement de cellules d'une batterie bipolaire selon la présente invention,
- les figures 2A et 2B sont des représentations dans des étapes intermédiaires de réalisation de l'empilement de la figure 2,
- la figure 3 est une vue en coupe longitudinale d'un troisième exemple de réalisation d'un empilement de cellules d'une batterie bipolaire selon la présente invention,
- la figure 4 est une représentation graphique d'une courbe de cyclage d'une batterie selon la présente invention, représentant l'évolution de la tension et de l'intensité en fonction du temps pendants trois cycles de charge/décharge,
- la figure 5 est une représentation graphique de l'évolution de la tension en V en fonction du temps en seconde aux bornes d'une batterie bipolaire selon la présente invention composée d'un empilement de treize cellules.

### EXPOSÉ DÉTAILLÉ DE MODES DE RÉALISATION PARTICULIERS

Dans la présente description, les expressions « paroi latérale de plus grande section » et « paroi latérale de plus petite section » sont utilisées pour décrire les dimensions relatives de deux parois latérales successives, une paroi latérale de plus grande section délimite avec sa face intérieure une zone centrale de surface plus grande que la surface extérieure délimitée par la face extérieure de la paroi latérale de plus petite section de sorte qu'il n'y ait aucune superposition entre les deux parois latérales successives, suivant la direction longitudinale. En fait, la paroi latérale de plus grande section présente des dimensions intérieures supérieures aux dimensions extérieures de la paroi latérale de plus petite section de sorte qu'il n'y ait pas recouvrement entre les deux parois latérales successives.

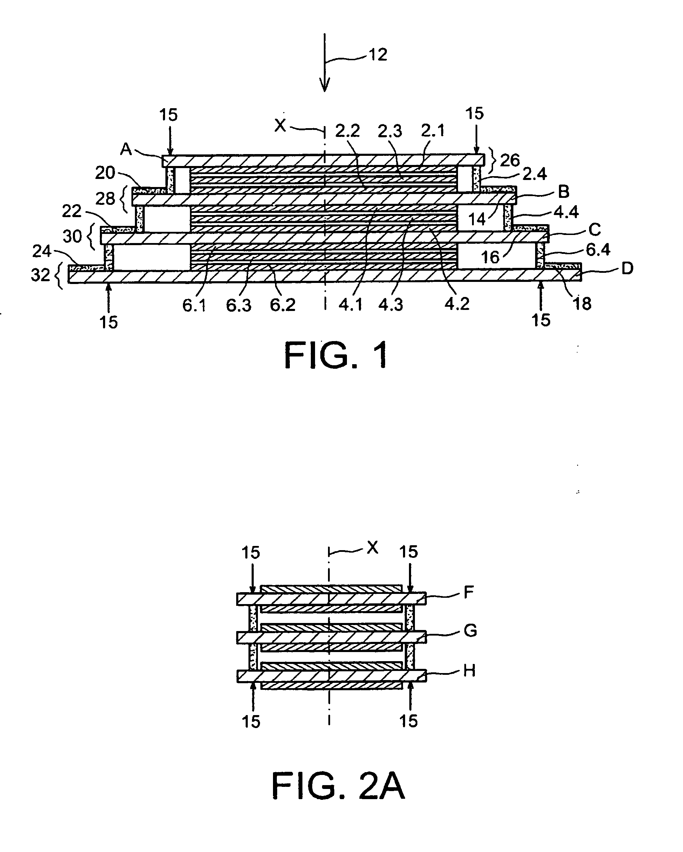

Sur la figure 1, on peut voir un premier exemple de réalisation d'un empilement de cellules pour batterie bipolaire selon la présente invention.

Nous appellerons « cellule », dans la présente description, un ensemble comportant une anode 2.1 en matériau électriquement conducteur, une cathode 2.2 en matériau électriquement conducteur et un électrolyte 2.3 disposé entre l'anode et la cathode.

Dans toute la description, nous considérerons le cas d'un empilement de cellules de forme rectangulaire. Cet empilement présente un axe longitudinal X. Mais un empilement ayant une section circulaire ou ovale ou de toute autre forme ne sort pas du cadre de la présente invention.

De manière avantageuse, l'électrolyte est liquide et est contenu dans un matériau microporeux diélectrique avec lequel sont en contact l'anode et la cathode.

Sur la figure 1, on peut voir un empilement d'une pluralité de cellules 2, 4, 6 reliées électriquement en série. Dans l'exemple représenté, seules trois cellules sont empilées.

La cellule 2 est formée d'une anode 2.1 en matériau électriquement conducteur, une cathode 2.2 en matériau électriquement conducteur et un électrolyte 2.3 disposé entre l'anode et la cathode.

L'anode 2.1 est portée par une plaque collectrice de courant A, cette dernière étant donc en contact électrique avec l'anode 2.1, et la cathode 2.2 est portée par une plaque collectrice de courant B, cette dernière étant en contact électrique avec la cathode 2.2.

La cellule 4 est formée d'une anode 4.1 en matériau électriquement conducteur, une cathode 4.2 en matériau électriquement conducteur et un électrolyte 4.3 disposé entre l'anode et la cathode.

L'anode 4.1 est portée par la plaque collectrice B sur une face opposée à celle recevant la cathode 2.2.

La cathode 4.2 est portée par une plaque collectrice C et est en contact électrique avec celle-ci.

La cellule 6 est formée d'une anode 6.1 en matériau électriquement conducteur, une cathode 6.2 en matériau électriquement conducteur et un électrolyte 6.3 disposé entre l'anode et la cathode.

L'anode 6.1 est portée par la plaque collectrice C sur une face opposée à celle recevant la cathode 4.2.

La cathode 6.2 est portée par une plaque collectrice D.

Les plaques collectrice B et C assurent la connexion électrique en série des cellules 2, 4, 6.

Les cathodes sont par exemple en LiFePO₄, et les anodes sont par exemple en Li₄Ti₅O₁₂.

Les plaques collectrices A, B, C, D sont avantageusement en aluminium, ce qui permet de réduire la masse de la batterie de manière importante, en effet la densité de l'aluminium est trois fois inférieure à celle du cuivre. Mais il est bien entendu que des collecteurs en cuivre ou tout autre matériau conducteur électrique ne sortent pas du cadre de la présente invention.

Chaque cellule 2, 4, 6 est entourée d'une paroi 2.4, 4.4, 6.4 assurant le confinement de l'électrolyte 2.3, 4.3, 6.3 dans la cellule et évitant une circulation d'électrolyte entre les cellules. Dans l'exemple décrit, chaque paroi entoure la cellule, et a donc la forme d'un rectangle évidé.

Ces parois sont par exemple à base d'un polymère thermoactivable de type époxy, ou d'une colle, de type acrylique ou polyuréthane.

Selon la présente invention, les parois sont telles que deux parois successives ne sont pas superposées selon l'axe X.

Dans l'exemple représenté sur la figure 1, les parois ont une section générale rectangulaire évidée en son centre.

Les parois forment en fait des joints, dont la forme générale est celle d'un cadre rectangulaire entourant la cellule.

On prévoit que la paroi d'une cellule aval selon le sens indiqué par la flèche 12 ait des dimensions intérieures supérieures à celles de la paroi amont. Plus particulièrement, on prévoit que la longueur et la largeur de l'évidement de la paroi aval soient supérieures à la longueur et à la largeur extérieure de la paroi amont.

Ainsi, la paroi 2.4 et la paroi 4.4 ne sont pas superposées en regardant selon la flèche 12.

De même, les parois 4.4 et 6.4 ne sont pas superposées.

Par ailleurs, dans l'exemple représenté, les plaques conductrices A, B, C ont également une surface croissante selon la flèche 12.

Les dimensions extérieures de chaque paroi 2.4, 4.4, 6.4 sont avantageusement telles qu'elles soient sensiblement égales à celles de la plaque collectrice de plus petites dimensions parmi les deux plaques collectrices entre lesquelles elle s'étend. Des épaulements 14, 16, 18 sont donc définis sur la périphérie extérieure des plaques de plus grande surface de chaque cellule.

Cette réalisation en degrés évite la déformation des bords de plaques et par conséquent les risques de court-circuit.

Ainsi, l'empilement représenté sur la figure 1 a sensiblement la forme d'une pyramide à degrés.

Les parois 4.2, 6.2, sont situées au dessous des épaulements 14, 16 sur la figure 1 ; il est alors possible de venir appliquer un moyen de chauffage sur chaque épaulement 14, 16 pour chauffer le matériau constituant la paroi, et assurer sa solidarisation aux deux plaques collectrices.

Ainsi, l'opération de confinement de l'électrolyte a lieu au niveau de chaque cellule et non seulement au niveau des extrémités longitudinales de l'empilement.

De manière avantageuse, on prévoit d'utiliser des électrodes de même taille pour toutes les cellules, ce qui permet de simplifier la fabrication, et d'en réduire les coûts. Seule la taille des plaques collectrices varie. Par ailleurs, la surface de l'empilement anode/électrolyte/cathode, désigné également matière active, est avantageusement invariable pour tout l'empilement, de sorte à avoir un empilement strict de tous les empilements les uns par rapport aux autres. Ceci permet d'avoir la matière active de chaque cellule éloignée de la zone où est appliqué le chauffage pour effectuer les étanchéités. En outre, cet empilement strict permet d'obtenir une batterie dont les performances sont améliorées, par rapport à une batterie dont la taille de la matière active varierait d'une cellule à l'autre.

On prévoit de fixer une électrode sur une plaque collectrice, puis de découper la plaque collectrice à la dimension souhaitée. Ainsi, on n'utilise qu'une seule taille initiale de plaque collectrice et une seule taille d'électrode.

Grâce à la structure de l'empilement selon la présente invention, les épaulements 14, 16 forment par ailleurs une barrière supplémentaire en cas de fuite au niveau des parois 2.4, 4.4. En effet, en cas de fuite, l'électrolyte devrait parcourir l'épaulement, ce qui réduit encore le risque de circulation d'électrolyte d'une cellule à l'autre.

De manière avantageuse, on prévoit de recouvrir entièrement les épaulements 14, 16, 18 avec des couches 20, 22, 24 respectivement en matériau résistant à l'électrolyte, par exemple de type colle, comme un polyacrylique ou un polyuréthane.

Les couches 20, 22, 24 sont en contact par leur périphérie intérieure avec la face extérieure des parois 2.4, 4.4, 6.4.

En cas de fuite entre les parois 2.4, 4.4, 6.4 et la plaque collectrice inférieure B, C, D, la couche 20, 22, 24 forme un obstacle supplémentaire à l'écoulement de l'électrolyte.

Dans l'exemple représenté, la plaque D est de dimensions supérieures à celles de la plaque C, et délimitent un épaulement. Cependant, on pourrait prévoir que les plaques C et D soient de même taille. Par contre, ce rebord permet avantageusement l'application d'une couche de colle, afin d'augmenter encore le niveau d'étanchéité.

On peut prévoir d'augmenter le nombre de cellules empilées pour atteindre la tension et la densité d'énergie requise, la surface des plaques collectrices croissant dans une direction donnée de l'empilement.

Nous allons maintenant expliquer le procédé de fabrication d'un tel empilement.

Par exemple, en premier lieu des ensembles formés par une plaque collectrice et une électrode sont réalisés et des ensembles avec des électrodes sur les deux faces d'une plaque collectrice.

Ainsi on forme pour réaliser l'empilement de la figure 1 :
- un ensemble 26 comportant la plaque collectrice A et l'anode 2.1,
- un ensemble 28 comportant la plaque collectrice B, la cathode 2.2 et l'anode 4.1,
- un ensemble 30 comportant la plaque collectrice C, la cathode 4.2 et l'anode 6.1,
- un ensemble 32 comportant la plaque collectrice D et la cathode 6.2.

Par exemple, les plaques ont à ce stade de réalisation toutes la même surface.

Ensuite, les plaques collectrices, A, B, C, D sont découpées de sorte que les surfaces des plaques A, B, C et D soient croissantes dans cet ordre.

Ensuite, on empile les ensembles 32, 30, 28, 26 dans cet ordre en interposant l'électrolyte entre l'anode et la cathode de chaque cellule.

Pour cela, on dispose en premier l'ensemble 32.

Puis on dépose la paroi 6.4 sur la plaque collectrice C autour de la cathode 6.2, la paroi se présente sous la forme d'un rectangle évidé réalisé dans un film, par exemple polymère. Avantageusement, ce film a sensiblement l'épaisseur de la cellule, i.e. l'épaisseur de l'empilement anode-électrolyte-cathode, afin d'éviter les distorsions géométriques.

L'électrolyte est ensuite disposé sur la cathode 6.2, on peut prévoir de disposer l'électrolyte avant la paroi 6.4.

L'ensemble 30 est ensuite déposé sur l'ensemble 32 et la paroi 6.4. Puis on dépose la paroi 4.4 et l'électrolyte, l'ensemble 28, la paroi 2.4 et l'électrolyte et enfin l'ensemble 26.

Ensuite, on réalise le scellement des parois sur les plaques collectrices avec lesquelles elles sont en contact.

Pour cela, et grâce à la configuration particulière de l'invention, en chauffant les plaques collectrices d'extrémité A et B de l'empilement, on obtient une répartition uniforme de la température au niveau des parois 2.4, 4.4 et 6.4. En particulier, la paroi 4.4 est suffisamment chauffée pour se solidariser aux plaques collectrices B et C, sans qu'une quantité de chaleur excessive soit apportée aux parois 2.4 et 6.4. Le scellement s'effectue alors sans déformation.

Ce procédé de réalisations s'applique à un empilement de plus de trois cellules, mais est particulièrement avantageux dans le cas d'un empilement de trois cellules.

Le moyen de chauffage est, par exemple formé par deux éléments destinés à venir en contact plan avec les plaques collectrices d'extrémité A et B au moins au droit des parois 2.4 et 6.4. Ces deux éléments ont, par exemple la forme de cadre correspondant à celui des parois. Avantageusement, on évite de chauffer la partie centrale de la cellule au droit des l'empilement anode-électrolyte-cathode.

Il est possible également de réaliser un scellement individuel, en prévoyant que le moyen de chauffage vienne en contact sur la périphérie de chaque plaque collectrice au droit de la paroi.

Pour cela, on prévoit d'appliquer le moyen de chauffage sur les plaques d'extrémité et les plaques collectrices intermédiaires, simultanément ou successivement.

Dans ce cas particulier, la quantité de chaleur apportée par le moyen de chauffage est transmise par conduction au matériau des parois 2.4, 4.4, 6.4 qui fond et se fixe aux plaques collectrices en refroidissant.

Le moyen de chauffage a, dans ce cas, de préférence une forme assurant un contact surfacique avec les épaulements et assurant un contact sur tout l'épaulement. Ainsi dans l'exemple représenté d'un empilement ayant une forme d'une pyramide à degrés, le moyen de chauffage comporte au moins une surface formée par un contour rectangulaire.

Pour la réalisation du procédé particulier ci-dessus, Le moyen de chauffage peut avoir une forme intérieure correspondant à la forme extérieure de l'empilement, c'est-à-dire avec une pluralité de gradins correspondant aux épaulements de l'empilement, ou celui-ci peut comporter une seule surface de chauffage qui est appliquée successivement sur chaque épaulement, dans ce cas cette surface est modifiable de manière à pouvoir s'ajuster aux dimensions des épaulements.

Le scellement s'effectue généralement sans exercer un effort axial sur l'empilement. Mais on pourrait prévoir d'appliquer un tel effort.

Ainsi, grâce à l'invention, chaque paroi est chauffée de manière suffisante pour la sceller aux deux plaques collectrices qu'elle relie, et ne subit pas de surchauffe inutile.

Enfin, de manière avantageuse, les couches 20, 22, 24 sont déposées sur les périphéries des plaques collectrices, réduisant encore les risques de fuite.

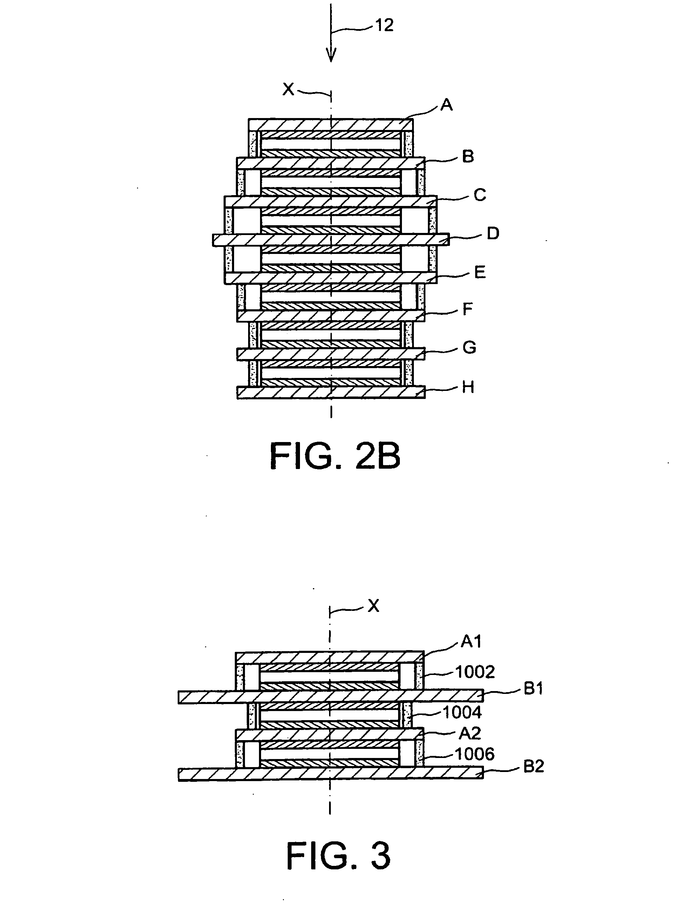

Dans cet exemple, les couches 20, 22, 24 recouvrent toute la périphérie extérieure des plaques collectrices, mais on pourrait prévoir de réaliser des couches qui ne couvrent que partiellement la périphérie extérieure des plaques. Cependant, comme nous le verrons dans l'exemple représenté sur la figure 3, cette couverture totale permet d'éviter les risques de court-circuit entre plaques.

Dans le procédé décrit ci-dessus, on empile toutes les plaques, les électrolytes et les parois avant de réaliser le scellement. On pourrait cependant effectuer le scellement au fur et à mesure de l'empilement des plaques. Dans ce cas, l'invention permet encore d'éviter un chauffage supplémentaire d'une paroi lorsque celle-ci a déjà été scellée lors d'une étape préalable.

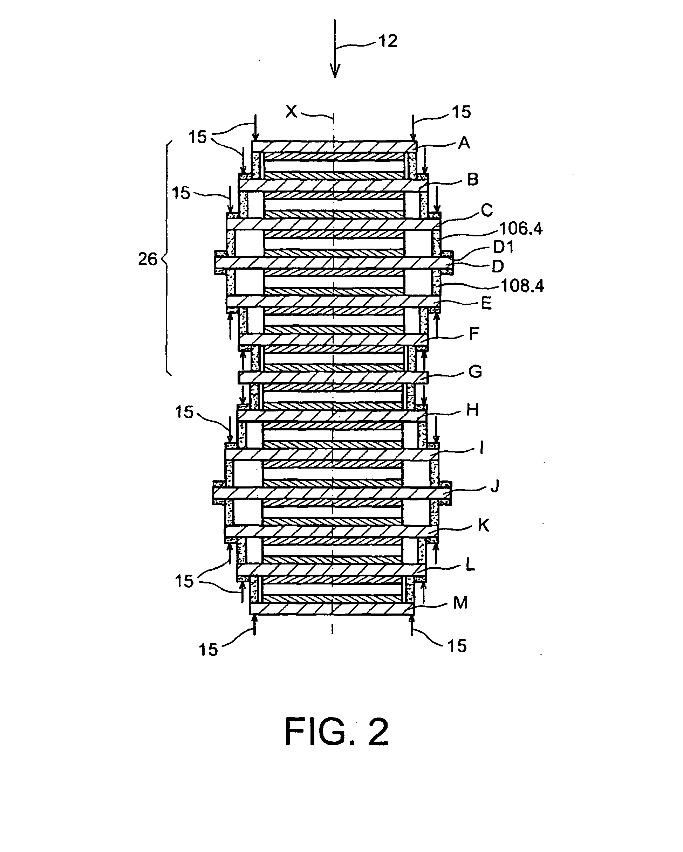

Sur la figure 2, on peut voir un deuxième exemple de réalisation d'un empilement de cellules pour une batterie bipolaire, dans lequel un motif est répété afin de limiter la section maximale des plaques collectrices. Dans l'exemple représenté, l'empilement comporte douze cellules et treize plaques interconnectrices désignées A à M de haut en bas.

L'empilement de la figure 2 est composé d'une succession de deux motifs identiques 26.

Le motif 26 comporte un empilement de six cellules reliées en série par des plaques collectrices A, B, C, D, E, F, G. Les parois reliant les plaques A et B, B et C, et C et D dans cet ordre sont de section croissante selon la flèche 12, et les parois reliant les plaques D et E, E et F, F et G sont, dans cet ordre, de section décroissante. Le motif 26 a donc sensiblement, vu de face, le contour d'un hexagone régulier. En outre, les plaques A, B, C et D sont de surface croissante dans cet ordre, et les plaques D, E, F et G sont de surface décroissante dans cet ordre.

Dans l'exemple représenté, les parois 106.4, et 108.4 sont alignées vu selon la flèche 12. Cependant, ces parois sont chacune associées à un épaulement différent, ainsi le matériau composant chacune de ces parois peut être chauffé séparément au niveau de l'épaulement associé.

La périphérie extérieure D1 de la plaque collectrice D qui est disposée au centre de l'empilement est recouverte sur ces deux faces d'une couche 28 pour améliorer l'étanchéité.

Grâce à cette configuration, il est ménagé pour chaque paroi, une zone sur une plaque conductrice avec laquelle peut venir en contact le moyen de chauffage symbolisé par la flèche 15, en limitant l'encombrement transversal de l'empilement.

Comme pour la pile de la figure 1, on choisit préférentiellement une taille de matière active identique pour toutes les cellules, les ensembles anode/électrolyte/cathode étant empilés de sorte à être alignés les uns par rapport aux autres.

Nous allons maintenant décrire le procédé de réalisation de cet empilement.

Comme cela est représenté sur la figure 2A, on commence par réaliser l'empilement central formé par les plaques F, G et H. Ces trois plaques présentent des surfaces égales.

L'empilement est réalisé de manière similaire à celle décrite pour l'empilement de la figure 1, en interposant les parois découpées dans un film entre deux plaques collectrices.

Ensuite le moyen de chauffage est appliqué sur la périphérie extérieure des plaques F et G, symbolisé par les flèches 15.

On poursuit l'empilement des plaques vers le haut comme représenté sur la figure 2B, le scellement est réalisé en chauffant individuellement au niveau des extrémités périphériques libres des plaques collectrices A, B, C, E et F, comme pour l'empilement de la figure 1.

Lorsque la plaque collectrice A a été scellée, l'empilement partiel est retourné de sorte, que la plaque A forme l'extrémité inférieure de l'empilement. On poursuit ensuite l'empilement des plaques munies des électrodes et le scellement.

Sur la figure 3, on peut voir un autre exemple de réalisation d'un empilement selon la présente invention, comportant deux types de plaque collectrice de surface différente.

Ainsi l'empilement comporte des plaques A, de plus petite surface et des plaques B de plus grande surface alternées.

Dans cet exemple de réalisation, le scellement est effectué au fur et à mesure que les plaques collectrices sont empilés et non à la fin comme dans l'exemple de la figure 1.

Selon la présente invention, les parois de deux cellules successives ne sont pas superposées ce qui évite, lors du scellement de la deuxième paroi, de chauffer à nouveau la première paroi scellée.

Les parois sont désignées par les références de 1002 à 1006.

Par exemple, on empile les plaques collectrices A1, B1 et de la paroi 1002. On effectue le scellement de cet assemblage en appliquant le moyen de chauffage sur l'une des plaques A1, B1 au droit de la paroi 1002.

Ensuite on empile la plaque A2 et la paroi 1004, celle-ci n'étant pas au droit de la paroi 1002. Lors du scellement, le moyen de chauffage est appliqué sur la plaque A2 au droit de la paroi 1004 qui n'est pas au droit de la paroi 1002, celle-ci n'est donc pas soumise à nouveau à un échauffement ou alors seulement à un échauffement réduit.

On poursuit l'empilement des plaques et de parois et le scellement au fur et à mesure.

Ensuite, on dépose la colle sur la périphérie extérieure libre des plaques afin de former une deuxième barrière d'étanchéité.

Cette couche présente, en outre l'avantage d'assurer un isolement électrique entre deux plaques collectrices. En effet lors du scellement et vu les faibles épaisseurs des plaques, de l'ordre de 20 µm à 70 µm, leurs périphéries extérieures sont déformées et sont susceptibles de venir en contact l'une avec l'autre et de provoquer un court-circuit. Or, grâce à la présence de la couche de colle, ce court-circuit est évité même en cas de contact entre les plaques.

Comme pour la pile de la figure 1, on choisit préférentiellement une taille de matière active identique pour toutes les cellules, les ensembles anode/électrolyte/cathode étant empilés de sorte à être alignés les uns par rapport aux autres.

A titre d'exemple, nous pouvons donner les valeurs suivantes pour les dimensions d'un empilement de cellules selon la présente invention.

Les parois ont une hauteur d'environ 1 mm. La capacité de la batterie est proportionnelle à la surface des électrodes. On peut donc envisager des plaques collectrices ayant une surface pouvant varier du cm² au m².

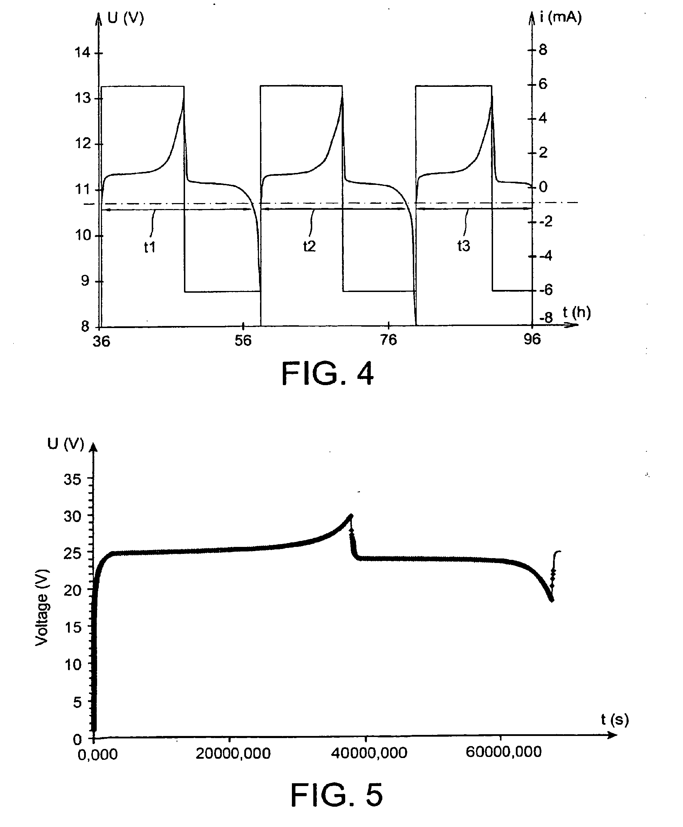

Sur la figure 4, on peut voir un graphique représentant l'évolution de la tension U en Volt et de l'intensité i en mA aux bornes de la batterie en fonction du temps en heure, appelé courbe de cyclage, afin de démontrer l'absence de courant ionique dans la batterie selon la présente invention, et donc une étanchéité des parois à l'électrolyte. La batterie, selon la présente invention, utilisée dans ce cas comporte six cellules de taille croissant entre 22x20 cm² à 16 × 14 cm².

Cette courbe représente plusieurs cycles de charge et de décharge de la batterie.

Afin de vérifier si aucun courant ionique ne se produit dans l'assemblage durant le cyclage, on relève les temps de charge et de décharge pour un même régime appliqué. Si ces derniers sont identiques, la batterie bipolaire fonctionne correctement, il n'y a donc pas de déplacement d'électrolyte d'une cellule à l'autre, l'étanchéité des compartiments est donc effective.

Comme on peut le constater, les temps t1, t2, t3 de charge-décharge des trois cycles sont identiques, il s'agit du temps mesuré entre deux passages à une intensité nulle lors d'un même cycle. Par conséquent, le procédé de réalisation d'une batterie selon la présente invention permet d'éviter efficacement la présence de fuite et donc l'apparition de courant ionique.

Une batterie selon la présente invention peut comporter une pluralité d'empilements reliés en parallèle ou en série, afin d'atteindre la tension nominale et la densité d'énergie requises.

Sur la figure 5, on peut voir une représentation graphique de l'évolution de la tension U en Volt aux bornes d'une batterie bipolaire selon la présente invention en fonction du temps t en seconde, comportant un empilement de treize cellules connectées en série, chaque cellule ayant une tension unitaire de 1,9V. La batterie a alors une tension de 24,7 V et une capacité de 0,7 Ah.

La tension de 24V aux bornes de la pile peut être garantie pendant au moins un période de 60000 secondes.

Nous n'avons pas décrit l'environnement de l'empilement, mais celui-ci est classique et connu de l'homme du métier.

La batterie selon la présente invention peut notamment être utilisée comme source d'énergie électrique dans un véhicule automobile électrique, permettant de ne plus recourir à des énergies fossiles.

## Revendications

1. Procédé de fabrication d'une batterie bipolaire comportant aux moins trois cellules munies de quatre plaques collectrices de surfaces différentes, comportant les étapes :
a) empilement selon un axe longitudinal d'une succession des plaques collectrices de surfaces différentes, entre chaque paire de plaques collectrices étant disposés une anode, un électrolyte, une cathode dans cet ordre selon l'axe longitudinal et une paroi latérale entourant l'anode, l'électrolyte et la cathode, parmi les parois latérales de deux cellules adjacentes, l'une étant une paroi latérale de plus grande section et l'autre étant une paroi latérale de plus petite section, la paroi latérale de plus grande section délimitant avec sa face intérieure une zone centrale de surface plus grande que la surface extérieure délimitée par la face extérieure de la paroi latérale de plus petite section, de sorte qu'il n'y ait aucune superposition entre les parois latérales de deux cellules adjacentes,
b) apport de chaleur par application d'un moyen de chauffage sur la périphérie extérieure libre des deux plaques collectrices d'extrémité de l'empilement, au moins au droit des parois latérales d'extrémité de l'empilement, pour solidariser chaque paroi latérale avec lesdites plaques collectrices qui lui sont juxtaposées, et/ou sur la périphérie extérieure libre des plaques collectrices intermédiaires de l'empilement au moins au droit d'une paroi latérale pour solidariser ladite paroi latérale avec ladite plaque collectrice et une plaque collectrice suivante de sorte que les zones sur lesquelles la chaleur est appliquée ne soient pas alignées selon l'axe longitudinal.

2. Procédé de fabrication selon la revendication 1, dans lequel, lors de l'étape b), l'apport de chaleur aux plaques intermédiaires a lieu simultanément pour solidariser toutes les parois latérales aux plaques collectrices correspondantes simultanément.

3. Procédé de fabrication selon la revendication 1, dans lequel l'apport de chaleur aux plaques intermédiaires a lieu successivement pour chaque paroi latérale.

4. Procédé de fabrication selon l'une des revendications 1 à 3, dans lequel préalablement à l'étape a), une étape a0) de réalisation d'un ensemble d'une plaque collectrice et d'une anode, d'un ensemble d'une plaque collectrice et d'une cathode et d'ensembles de plaques collectrices avec une anode sur une face et une cathode sur une autre face est prévue.

5. Procédé de fabrication selon la revendication 4, dans lequel, suite à l'étape a0) et avant l'étape a), il est prévu une étape de découpe des plaques collectrices à la surface requise.

6. Procédé de fabrication selon la revendication 4, dans lequel les plaques collectrices sont découpées de manière à avoir des plaques collectrices de surface décroissante.

7. Procédé de fabrication selon la revendication 3, dans lequel l'étape b) est effectuée en premier au niveau des plaques de plus petites surfaces.

8. Procédé de fabrication selon l'une des revendications 1 à 7, comportant une étape suivant l'étape b) de dépôt d'une couche de matériau résistant à l'électrolyte sur la périphérie extérieure libre de chaque plaque collectrice et en contact avec les parois latérales.

9. Batterie bipolaire obtenue par le procédé selon l'une des revendications 1 à 8, comportant au moins trois cellules électrochimiques empilées selon un axe longitudinal, chaque cellule étant composée d'une anode, d'une cathode et d'un électrolyte disposé entre l'anode et la cathode, une plaque collectrice (B, C) de courant reliant électriquement une anode d'une cellule et une cathode d'une cellule adjacente, une plaque collectrice de courant sur l'anode (A) d'une cellule située à une première extrémité longitudinale de l'empilement, une plaque collectrice (D) de courant sur la cathode située à une deuxième extrémité longitudinale de l'empilement, une paroi latérale (2.4, 4.4, 6.4) étanche à l'électrolyte entourant chaque cellule entre chaque paire de plaques collectrices (A, B, C, D) successives, chaque paire de plaques collectrices formant avec une paroi latérale (2.4, 4.4, 6.4) un compartiment étanche pour chaque cellule, selon un axe longitudinal d'une succession des plaques collectrices de surfaces différentes, entre chaque paire de plaques collectrices étant disposés une anode, un électrolyte, une cathode dans cet ordre selon l'axe longitudinal et une paroi latérale entourant l'anode, l'électrolyte et la cathode, parmi les parois latérales de deux cellules adjacentes, l'une étant une paroi latérale de plus grande section et l'autre étant une paroi latérale de plus petite section, la paroi latérale de plus grande section délimitant avec sa face intérieure une zone centrale de surface plus grande que la surface extérieure délimitée par la face extérieure de la paroi latérale de plus petite section, de sorte qu'il n'y ait aucune superposition entre les parois latérales de deux cellules adjacentes, les plaques collectrices étant de tailles différentes, dans laquelle lesdites plaques collectrices sont empilées de sorte que leurs tailles soient strictement croissantes ou strictement décroissantes.

10. Batterie bipolaire selon la revendication 9 comportant au moins un premier sous-ensemble de cellules comportant des plaques collectrices de tailles strictement croissantes et un deuxième sous-ensemble de cellules comportant des plaques collectrices de tailles strictement décroissantes.

11. Batterie bipolaire selon la revendication précédente, comportant plusieurs premiers et deuxièmes sous ensembles se succédant longitudinalement de manière alternée.

12. Batterie bipolaire obtenue par le procédé de la revendication 1 à 8, comportant au moins trois cellules électrochimiques empilées selon un axe longitudinal, chaque cellule étant composée d'une anode, d'une cathode et d'un électrolyte disposé entre l'anode et la cathode, une plaque collectrice (B, C) de courant reliant électriquement une anode d'une cellule et une cathode d'une cellule adjacente, une plaque collectrice de courant sur l'anode (A) d'une cellule située à une première extrémité longitudinale de l'empilement, une plaque collectrice (D) de courant sur la cathode située à une deuxième extrémité longitudinale de l'empilement, une paroi latérale (2.4, 4.4, 6.4) étanche à l'électrolyte entourant chaque cellule entre chaque paire de plaques collectrices (A, B, C, D) successives, chaque paire de plaques collectrices formant avec une paroi latérale (2.4, 4.4, 6.4) un compartiment étanche pour chaque cellule, les parois latérales (2.4, 4.4, 6.4) de deux cellules adjacentes étant décalées transversalement l'une par rapport à l'autre par rapport à l'axe longitudinal (X) de sorte qu'il n'y ait aucune superposition entre elles, ladite batterie comportant des parois latérales de plus grande section transversale et des parois latérales de plus petite section transversale, une paroi latérale de plus grande section délimitant avec sa face intérieure une zone centrale de surface plus grande que la surface extérieure délimitée par la face extérieure de la paroi latérale de plus petite section, lesdites parois de plus grande section transversale et lesdites parois de plus petite section transversale se succédant alternativement, et des plaques collectrices de plus grande section transversale et des plaques collectrices de plus petite section transversale, les plaques collectrices de plus grande section transversale et les plaques collectrices de plus petite section transversale se succédant alternativement, de sorte qu'une paroi de plus grande section transversale se trouve entre une plaque collectrice de plus grande section transversale et une plaque collectrice de plus petite section transversale et entre deux cellules comportant chacune deux parois latérales de plus petite section transversale, et qu'une paroi de plus petite section transversale se trouve entre une plaque collectrice de plus grande section transversale et une plaque collectrice de plus petite section transversale et entre deux cellules comportant chacune deux parois latérales de plus grande section.

13. Batterie selon l'une des revendications 9 à 12, dans laquelle les parois (2.4, 4.4, 6.4) sont situées au droit des bords extérieurs d'une des plaques collectrices (A, B, C) qu'elle relie.

14. Batterie selon l'une des revendications 9 à 13, dans laquelle les extrémités des plaques collectrices (B, C, D) sont recouvertes d'une couche (20, 22, 24) formant une barrière supplémentaire à l'écoulement de l'électrolyte.

15. Batterie bipolaire selon la revendication 14, dans laquelle ladite couche (20, 22, 24) est une colle du type polyacrylique ou polyuréthane.

16. Batterie selon l'une des revendications 9 à 15, dans laquelle les parois (2.4, 4.4, 6.4) sont en polymère thermoactivable, du type époxy, ou en colle du type polyacrylique ou polyuréthane

17. Batterie selon l'une des revendications 9 à 16, dans laquelle les cathodes sont en LiFePO₄, et les anodes sont en Li₄Ti₅O₁₂.

## Claims

1. Method of manufacturing a double pole battery comprising at least three cells fitted with four collector plates with different surfaces, comprising the steps of:
a) stacking along a longitudinal axis a succession of the collector plates with different surfaces, between each pair of collector plates being placed an anode, an electrolyte, and a cathode in that order along the longitudinal axis and a lateral wall surrounding the anode, the electrolyte and the cathode, among the lateral walls of two adjacent cells, one of the lateral walls being a lateral wall of larger transverse cross-section and the other one being a lateral wall of smaller transverse cross-section, lateral wall of larger transverse cross-section delimitating with its inner face a central zone, which has an area larger than the outer area which is delimitated bay an outer face of the lateral wall of smaller, in such manner that the lateral walls of two adjacent cells are not superposed one on the other,
b) supplying heat by applying a heating means to the free outer periphery of the two end collector plates of the stack, at least plumb with the end lateral walls of the stack, so as to secure each lateral wall to said collector plates which are juxtaposed thereto, and/or to the free outer periphery of the intermediate collector plates of the stack at least plumb with a lateral wall so as to secure said lateral wall to said collector plate and a next collector plate in such a way that the areas to which the heat is applied are not aligned along the longitudinal axis.

2. Manufacturing method as claimed in claim 1, wherein, at step b), the heat is supplied to the intermediate plates simultaneously in order to secure all the lateral walls to the corresponding collector plates simultaneously.

3. Manufacturing method as claimed in claim 1, wherein the heat is supplied to the intermediate plates successively in respect of each lateral wall.

4. Manufacturing method as claimed in one of claims 1 to 3, wherein prior to step a), provision is made for a step a0) of implementing an assembly of a collector plate and an anode, an assembly of a collector plate and a cathode and assemblies of collector plates with an anode on one face and a cathode on another face.

5. Manufacturing method as claimed in claim 4, wherein, subsequent to step a0) and before step a), provision is made for a step of cutting the collector plates to the required surface.

6. Manufacturing method as claimed in claim 4, wherein the collector plates are cut so as to give collector plates of decreasing surface.

7. Manufacturing method as claimed in claim 3, wherein step b) is carried out first on the plates with smaller surfaces.

8. Manufacturing method as claimed in one of claims 1 to 7, comprising a step following step b) of depositing a layer of material resistant to the electrolyte on the free outer periphery of each collector plate and in contact with the lateral walls.

9. Double pole battery obtained by the method as claimed in one of claims 1 to 8, comprising at least three electrochemical cells stacked along a longitudinal axis, each cell consisting of an anode, a cathode and an electrolyte placed between the anode and the cathode, a current collector plate (B, C) electrically connecting an anode of a cell and a cathode of an adjacent cell, a current collector plate on the anode (A) of a cell located at a first longitudinal end of the stack, a current collector plate (D) on the cathode located at a second longitudinal end of the stack, an electrolyte-proof lateral wall (2.4, 4.4, 6.4) surrounding each cell between each pair of successive collector plates (A, B, C, D), each pair of collector plates forming with a lateral wall (2.4, 4.4, 6.4) a leakproof compartment for each cell, along the longitudinal axis of a succession of collector plates with different areas, between each pair of collector plates being placed an anode, an electrolyte, and a cathode in that order along the longitudinal axis and a lateral wall surrounding the anode, the electrolyte and the cathode, among the lateral walls of two adjacent cells, one of the lateral walls being a lateral wall of larger transverse cross-section and the other one being a lateral wall of smaller transverse cross-section, lateral wall of larger transverse cross-section delimitating with its inner face a central zone, which has an area larger than the outer area which is delimitated bay an outer face of the lateral wall of smaller, in such manner that the lateral walls of two adjacent cells are not superposed one on the other, the collector plates being of different sizes, wherein said collector plates are stacked in such a way that they strictly increase or strictly decrease in size.

10. Double pole battery as claimed in claim 9 comprising at least a first sub-assembly of cells comprising collector plates that strictly increase in size and a second sub-assembly of cells comprising collector plates that strictly decrease in size.

11. Double pole battery as claimed in the previous claim, comprising several first and second sub-assemblies following each other longitudinally in an alternating way.

12. Double pole battery obtained by the method as claimed in claim 1 to 8, comprising at least three electrochemical cells stacked along a longitudinal axis, each cell consisting of an anode, a cathode and an electrolyte placed between the anode and the cathode, a current collector plate (B, C) electrically connecting an anode of a cell and a cathode of an adjacent cell, a current collector plate on the anode (A) of a cell located at a first longitudinal end of the stack, a current collector plate (D) on the cathode located at a second longitudinal end of the stack, an electrolyte-proof lateral wall (2.4, 4.4, 6.4) surrounding each cell between each pair of successive collector plates (A, B, C, D), each pair of collector plates forming with a lateral wall (2.4, 4.4, 6.4) a leakproof compartment for each cell, the lateral walls (2.4, 4.4, 6.4) of two adjacent cells being offset transversely one relative to the other relative to the longitudinal axis (X) in such a way that there is no superposition between them, said battery comprising lateral walls of larger transverse cross-section and walls of smaller transverse cross-section, a lateral wall of larger transverse cross-section delimitating with its inner face a central zone, which has an area larger than the outer area which is delimitated bay an outer face of the lateral wall of smaller cross-section, said walls of larger transverse cross-section and said walls of smaller transverse cross-section following each other alternately, and collector plates of larger transverse cross-section and collector plates of smaller transverse cross-section, the collector plates of larger transverse cross-section and the collector plates of smaller transverse cross-section following each other alternately, in such a way that a wall of larger transverse cross-section is found between a collector plate of larger transverse cross-section and a collector plate of smaller transverse cross-section and between two cells each comprising two lateral walls of smaller transverse cross-section, and that a wall of smaller transverse cross-section is found between a collector plate of larger transverse cross-section and a collector plate of smaller transverse cross-section and between two cells each comprising two lateral walls of larger cross-section.

13. Battery as claimed in one of claims 9 to 12, wherein the walls (2.4, 4.4, 6.4) are located plumb with the outer edges of one of the collector plates (A, B, C) it connects.

14. Battery as claimed in one of claims 9 to 13, wherein the ends of the collector plates (B, C, D) are coated with a layer (20, 22, 24) forming an additional barrier to electrolyte leakage.

15. Double pole battery as claimed in claim 14, wherein said layer (20, 22, 24) is an adhesive of the polyacrylic or polyurethane type.

16. Battery as claimed in one of claims 9 to 15, wherein the walls (2.4, 4.4, 6.4) are made of heat-activated polymer, of the epoxy type, or of adhesive of the polyacrylic or polyurethane type.

17. Battery as claimed in one of claims 9 to 16, wherein the cathodes are of LiFePO₄, and the anodes are of Li₄Ti₅O₁₂.

## Patentansprüche

1. Verfahren zum Herstellen einer bipolaren Batterie, die mindestens drei Zellen umfasst, die mit vier Sammelplatten mit unterschiedlichen Oberflächen versehen sind, das die folgenden Schritte umfasst:
a) Stapeln einer Folge von Sammelplatten mit unterschiedlichen Oberflächen gemäß einer Längsachse, wobei zwischen jedem Paar von Sammelplatten eine Anode, ein Elektrolyt, eine Kathode in dieser Reihenfolge gemäß der Längsachse angeordnet werden und eine Seitenwand die Anode, den Elektrolyt und die Kathode umgibt, wobei unter den Seitenwänden von zwei benachbarten Zellen die eine eine Seitenwand mit größerem Querschnitt ist und die andere eine Seitenwand mit kleinerem Querschnitt ist, wobei die Seitenwand mit dem größeren Querschnitt mit ihrer Innenfläche einen mittleren Bereich mit größerer Oberfläche abgrenzt als die Außenoberfläche, die durch die Außenfläche der Seitenwand mit dem kleineren Querschnitt abgegrenzt ist, derart, dass keine Übereinanderlagerung zwischen den Seitenwänden von zwei benachbarten Zellen vorliegt,
b) Zuführen von Wärme durch Anwendung eines Heizmittels auf den freien Außenumfang der zwei Sammelplatten am Ende des Stapels, wenigstens gegenüber den Seitenwänden des Endes des Stapels, um jede Seitenwand fest mit den neben ihr liegenden Sammelplatten zu verbinden, und/oder auf den freien Außenumfang der Zwischensammelplatten des Stapels wenigstens gegenüber einer Seitenwand, um die Seitenwand fest mit der Sammelplatte und einer folgenden Sammelplatte zu verbinden, derart, dass die Bereiche, auf die die Wärme angewandt wird, nicht gemäß der Längsachse ausgerichtet sind.

2. Herstellungsverfahren nach Anspruch 1, wobei im Schritt b) die Wärmezufuhr zu den Zwischenplatten gleichzeitig erfolgt, um alle Seitenwände gleichzeitig fest mit den entsprechenden Sammelplatten zu verbinden.

3. Herstellungsverfahren nach Anspruch 1, wobei die Wärmezufuhr zu den Zwischenplatten für jede Seitenwand aufeinanderfolgend stattfindet.

4. Herstellungsverfahren nach einem der Ansprüche 1 bis 3, wobei vor dem Schritt a) ein Schritt a0) zur Ausführung einer Baugruppe aus einer Sammelplatte und einer Anode, einer Baugruppe aus einer Sammelplatte und einer Kathode und von Baugruppen aus Sammelplatten mit einer Anode auf einer Fläche und einer Kathode auf einer anderen Fläche vorgesehen ist.

5. Herstellungsverfahren nach Anspruch 4, wobei nach dem Schritt a0) und vor dem Schritt a) ein Schritt zum Zuschneiden der Sammelplatten auf die erforderliche Oberfläche vorgesehen ist.

6. Herstellungsverfahren nach Anspruch 4, wobei die Sammelplatten derart zugeschnitten werden, dass Sammelplatten mit abnehmenden Oberflächen erhalten werden.

7. Herstellungsverfahren nach Anspruch 3, wobei der Schritt b) zuerst im Bereich der Platten mit den kleinsten Oberflächen durchgeführt wird.

8. Herstellungsverfahren nach einem der Ansprüche 1 bis 7, das einen auf den Schritt b) folgenden Schritt des Aufbringens einer Schicht aus Material, das gegenüber dem Elektrolyt beständig ist, auf dem freien Außenumfang jeder Sammelplatte und in Berührung mit den Seitenwände umfasst.

9. Bipolare Batterie, die durch das Verfahren nach einem der Ansprüche 1 bis 8 erhalten wird und die mindestens drei elektrochemische Zellen, die gemäß einer Längsachse gestapelt sind, wobei jede Zelle aus einer Anode, einer Kathode und einem Elektrolyt besteht, der zwischen der Anode und der Kathode angeordnet ist, eine Stromsammelplatte (B, C), die eine Anode einer Zelle und eine Kathode einer benachbarten Zelle elektrisch verbindet, eine Stromsammelplatte (A) auf der Anode einer Zelle, die sich an einem ersten Längsende des Stapels befindet, eine Stromsammelplatte (D) auf der Kathode, die sich an einem zweiten Längsende des Stapels befindet, und eine Seitenwand (2.4, 4.4, 6.4) umfasst, die gegenüber dem Elektrolyt dicht ist und die jede Zelle zwischen jedem Paar von aufeinanderfolgenden Sammelplatten (A, B, C, D) umgibt, wobei jedes Paar von Sammelplatten mit einer Seitenwand (2.4, 4.4, 6.4) gemäß einer Längsachse einer Folge von Sammelplatten mit unterschiedlichen Oberflächen einen dichten Raum für jede Zelle bildet, wobei zwischen jedem Paar von Sammelplatten eine Anode, ein Elektrolyt, eine Kathode, in dieser Reihenfolge gemäß der Längsachse, und eine Seitenwand angeordnet sind, die die Anode, den Elektrolyt und die Kathode umgibt, wobei unter den Seitenwänden von zwei benachbarten Zellen, die eine eine Seitenwand mit einem größeren Querschnitt ist und die andere eine Seitenwand mit einem kleineren Querschnitt ist, wobei die Seitenwand mit dem größeren Querschnitt mit ihrer Innenfläche einen mittleren Bereich mit größerer Oberfläche abgrenzt als die Außenoberfläche, die durch die Außenfläche der Seitenwand mit dem kleineren Querschnitt abgegrenzt ist, derart, dass keine Übereinanderlagerung zwischen den Seitenwänden von zwei benachbarten Zellen vorliegt, wobei die Sammelplatten unterschiedliche Größen aufweisen, wobei die Sammelplatten derart gestapelt sind, dass ihre Größen strikt zunehmend oder strikt abnehmend sind.

10. Bipolare Batterie nach Anspruch 9, die mindestens eine erste Unterbaugruppe aus Zellen, die Sammelplatten mit strikt zunehmenden Größen umfassen, und eine zweite Untergruppe aus Zellen umfasst, die Sammelplatten mit strikt abnehmenden Größen umfassen.

11. Bipolare Batterie nach dem vorhergehenden Anspruch, die mehrere erste und zweite Untergruppen umfasst, die in der Längsrichtung abwechselnd aufeinanderfolgen.

12. Bipolare Batterie, die durch das Verfahren nach Anspruch 1 bis 8 erhalten wird und die mindestens drei elektrochemische Zellen, die gemäß einer Längsachse gestapelt sind, wobei jede Zelle aus einer Anode, einer Kathode und einem Elektrolyt besteht, der zwischen der Anode und der Kathode angeordnet ist, eine Stromsammelplatte (B, C), die eine Anode einer Zelle und eine Kathode einer benachbarten Zelle elektrisch verbindet, eine Stromsammelplatte (A) auf der Anode einer Zelle, die sich an einem ersten Längsende des Stapels befindet, eine Stromsammelplatte (D) auf der Kathode, die sich an einem zweiten Längsende des Stapels befindet, eine Seitenwand (2.4, 4.4, 6.4), die gegenüber dem Elektrolyt dicht ist und die jede Zelle zwischen jedem Paar von aufeinanderfolgenden Sammelplatten (A, B, C, D) umgibt, wobei jedes Paar von Sammelplatten mit einer Seitenwand (2.4, 4.4, 6.4) einen dichten Raum für jede Zelle bildet, wobei die Seitenwände (2.4, 4.4, 6.4) von zwei benachbarten Zellen derart in der Querrichtung in Bezug auf die Längsachse (X) gegeneinander versetzt sind, dass keine Übereinanderlagerung zwischen ihnen vorliegt, wobei die Batterie Seitenwände mit größerem Querschnitt und Seitenwände mit kleinerem Querschnitt umfasst, wobei eine Seitenwand mit größerem Querschnitt mit ihrer Innenfläche einen mittleren Oberflächenbereich abgrenzt, der größer ist als die Außenoberfläche, die durch die Außenfläche der Seitenwand mit dem kleineren Querschnitt abgegrenzt ist, wobei die Wände mit dem größerem Querschnitt und die Wände mit dem kleineren Querschnitt abwechselnd aufeinanderfolgen, und Sammelplatten mit größerem Querschnitt und Sammelplatten mit kleinerem Querschnitt umfasst, wobei die Sammelplatten mit größerem Querschnitt und die Sammelplatten mit kleinerem Querschnitt abwechselnd aufeinanderfolgen, derart, dass eine Wand mit größerem Querschnitt sich zwischen einer Sammelplatte mit größerem Querschnitt und einer Sammelplatte mit kleinerem Querschnitt und zwischen zwei Zellen befindet, die jeweils zwei Seitenwände mit kleinerem Querschnitt umfassen, und **dadurch**, dass eine Wand mit kleinerem Querschnitt sich zwischen einer Sammelplatte mit größerem Querschnitt und einer Sammelplatte mit kleinerem Querschnitt und zwischen zwei Zellen befindet, die jeweils zwei Seitenwände mit größerem Querschnitt umfassen.

13. Batterie nach einem der Ansprüche 9 bis 12, wobei die Wände (2.4, 4.4, 6.4) sich gegenüber den Außenkanten von einer der Sammelplatten (A, B, C) befinden, die sie verbindet.

14. Batterie nach einem der Ansprüche 9 bis 13, wobei die Enden der Sammelplatten (B, C, D) mit einer Schicht (20, 22, 24) bedeckt sind, die eine zusätzliche Sperre gegen das Auslaufen des Elektrolyts bildet.

15. Bipolare Batterie nach Anspruch 14, wobei die Schicht (20, 22, 24) ein Klebstoff des Typs Polyacryl oder Polyurethan ist.

16. Batterie nach einem der Ansprüche 9 bis 15, wobei die Wände (2.4, 4.4, 6.4) aus wärmeaktivierbarem Polymer des Typs Epoxid oder aus Klebstoff des Typs Polyacryl oder Polyurethan bestehen.

17. Batterie nach einem der Ansprüche 9 bis 16, wobei die Kathoden aus LiFePO₄ bestehen und die Anoden aus Li₄Ti₅O₁₂ bestehen.
